(19) Europäisches Patentamt
European Patent Office
Office européen des brevets

(11) Veröffentlichungsnummer : **0 042 013**
**B1**

(12) # EUROPÄISCHE PATENTSCHRIFT

(45) Veröffentlichungstag der Patentschrift : **26.09.84**

(51) Int. Cl.$^3$ : **G 21 F 9/30**

(21) Anmeldenummer : **80107735.5**

(22) Anmeldetag : **09.12.80**

(54) **Anlage zum Aufschluss schwerlöslicher Substanzen und/oder zur Oxidation organischer, diese Substanzen enthaltender Abfälle.**

(30) Priorität : **08.05.80 DE 3017547**

(43) Veröffentlichungstag der Anmeldung : **23.12.81 Patentblatt 81/51**

(45) Bekanntmachung des Hinweises auf die Patenterteilung : **26.09.84 Patentblatt 84/39**

(84) Benannte Vertragsstaaten : **BE CH FR GB LI**

(56) Entgegenhaltungen :
**BERICHT HEDL-SA 2239, 30. September 1980, (Hanford Engineering Development Laboratory)-Microfilm 44S C.R. ALLEN: "Radioactive acid digestion test unit (RADTU)-1980"**
**BERICHT HEDL-SA 1392, November 1977, Microfilm-17S R.E. LERCH et al.: "Treatment of alpha-bearing combustible wastes using acid digestion"**

(73) Patentinhaber : **Kernforschungszentrum Karlsruhe GmbH**
**Weberstrasse 5**
**D-7500 Karlsruhe 1 (DE)**

(72) Erfinder : **Kemmler, Gerhard, Dr. Dipl.-Chem.**
**Weltzienstrasse 3**
**D-7500 Karlsruhe (DE)**
Erfinder : **Plessing, Jürgen, Dipl.-Ing.**
**Hauptstrasse 123**
**D-7513 Stutensee 1 (DE)**
Erfinder : **Wieczorek, Herbert, Dr. Dipl.-Chem.**
**Hebelstrasse 6**
**D-7504 Weingarten (DE)**

**EP 0 042 013 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Anlage zum Aufschluß schwerlöslicher Substanzen und/oder zur Oxidation organischer, die schwerlöslichen Substanzen enthaltender Abfälle, bei der die Substanzen mit oder ohne die Abfälle als Paste oder Dickstoff mit heißer Säure(n) in Verbindung gebracht und Wärmeverluste ausgeglichen werden. Insbesondere ist die Anlage verwendbar zum Aufschluß von $PuO_2$ bzw. Aufschluß und Oxidation brennbarer plutoniumhaltiger Abfälle.

Solche Abfälle setzen sich hauptsächlich aus den Materialien PVC, Polyäthylen, Neopren und Zellstoff zusammen. Menge und Plutoniuminventar dieses Abfalls sind nicht unbedeutend. So werden z. B. beim geplanten NEZ u. a. jährlich ca. 1 000 $m^3$ dieser Abfälle mit zusammen 120 kg Plutonium anfallen. Für ihre Behandlung wurde zum Zwecke der Volumenreduktion eine Reihe von Verfahren u. a. der Prozeß der Naßverbrennung entwickelt (siehe GB-A-1.330.527 und 1.418.330, US-A-3.957.676).

Dieses Verfahren beruht auf der chemischen Zersetzung der Abfälle durch konzentrierte Schwefel- und Salpetersäure bei einer Temperatur von 250 °C gemäß folgender summarischer Formel :

$$C_mH_n + n/2\ H_2SO_4 + m\ HNO_3 = m\ CO_2 + nH_2O + n/2\ SO_2 + m(N_2, N_2O, NO, NO_2)$$

Die Schwefelsäure besorgt dabei die Verkohlung der Abfälle, während die Salpetersäure dieses Verkohlungsprodukt zu Kohlendioxid oxidiert. Das Abgas, das den Reaktor verläßt, enthält ferner die Säuregase NO, $SO_2$ und HCl, die zu Säuren aufgearbeitet, abgetrennt und im Falle von $HNO_3$ und $H_2SO_4$ in den Prozeß zurückgeführt werden. Aus den Füllstoffen der Abfälle bildet sich ein anorganischer Rückstand, in dem sich das Plutonium sammelt. Dieser Rückstand verbleibt aufgrund der kleinen Dichtedifferenz und der permanenten Bewegung der Säure im Reaktor suspendiert.

Bei dem Prozeß der Naßverbrennung wird nach einer angemessenen Verweilzeit schwerlösliches Plutoniumoxid in ein relativ leichtlösliches Plutoniumsulfat überführt. Dieser chemische Vorgang stellt einen wichtigen Schritt zur Abtrennung des Plutoniums dar.

Der Nachteil der bisherigen Lösungen ist die ungenügende Umwälzung des Plutoniumoxids bzw. des gesamten Feststoffs in der Reaktionssäure. Eine technische Verwirklichung ist bei C. Allen et al, HDL-TME 78-77 beschrieben, wobei ein s. g. Schalenreaktor verwendet wird. Der Reaktor besteht aus zwei Teilen : einem Säureerhitzer und einem Oxidationsofen. Zwischen den beiden Teilen wälzt eine Mammutpumpe die Reaktionssäure um. Im Säureerhitzer erfolgt die Erwärmung der Reaktionssäure auf eine Temperatur von 250 °C. Diese heiße Säure wird im Oxidationsofen auf einer Schale (tray) mit dem Abfall und Salpetersäure in Kontakt gebracht. Dabei oxidiert der Abfall. Es bilden sich gasförmige Produkte und es verbleibt ein Rückstand, der auch das Plutonium enthält.

Bei diesem Typ von Reaktor zeigt sich, daß sich auf der Schale des Oxidationsofens und am Boden des Säureerhitzers vorzugsweise die schweren Bestandteile des Rückstandes absetzen. Eine Steigerung der Temperatur ist wegen der z. B. an der Mammutpumpe verwendeten Materialien nicht mehr möglich ; diese Materialien schränken u. a. auch die Lebensdauer der Anlage ein.

Die der Erfindung zugrundeliegende Aufgabe besteht nunmehr darin, eine Anlage zu bieten, mit der schwerlösliche Substanzen im Zusammenhang mit der Oxidation von brennbaren Stoffen oder alleine aufgeschlossen werden, wobei sich die schwerlöslichen Stoffe nicht irgendwo an der Anlage absetzen können und auf mechanische Umwälz- und/oder Verwirbelungselemente verzichtet werden kann.

Die Lösung dieser Aufgabe ist in den kennzeichnenden Merkmalen des Anspruches 1 beschrieben. Die weiteren Ansprüche geben vorteilhafte Weiterbildungen bzw. Ausführungsformen der Erfindung wieder.

Der besondere Vorteil der Erfindung besteht darin, daß, aufbauend auf der Basis eines Umlaufverdampfers, mit Gas-Luft eine Flüssigkeitsumwälzung durch Änderung der Dichte der Flüssigkeit, unterstützt durch die Blasenbildung an der Oberfläche der Heizung und, beim Aufschluß der Substanzen alleine, durch die Heizung erreicht wird. Die Flüssigkeitsumwälzung wird stark verstärkt, wenn diesen Effekten die Blasenbildung durch Verdampfung der Salpetersäure (bei Eintritt von kalter 65 Gew.-%-iger Salpetersäure, Kp. 120 °C, in die heiße konzentrierte Schwefelsäure bei T = 250 °C geht die Salpetersäure sofort in Gas über) und/oder Einspeisung von Luft und/oder Einspeisung von Abfall mit Blasenbildung bei der Oxidation des Abfalles überlagert wird.

Die Erfindung wird im folgenden anhand eines technischen Ausführungsbeispiels mittels der Figur und Ergebnissen näher erläutert.

Der Reaktor besteht aus einem Ringreaktor 1 mit mindestens einem vertikalen Bereich 3 und einem horizontalen Bereich 2 sowie einer Zuführungszone 4. Er weist die Form einer in sich geschlossenen Röhre mit variablen Durchmessern von 50-80 mm auf, wobei die Armlänge ca. 1 × 1 m beträgt. Glas und Tantal eignen sich als Herstellungsmaterial.

Der horizontale Bereich 2 enthält die Entgasungszone 5, die erweitert ist und eine Abgasleitung 12 aufweist, über die das Abgas aus dem in Pfeilrichtung im Ringreaktor 1 umgewälzten Gemisch abgeführt werden kann.

In einem vertikalen Bereich 3 sind die Heizzone 6 und die Zuführungszone 4, in Strömungsrichtung (s. Pfeile) gesehen, übereinander angeordnet. Über die Zuführungszone 4 kann dem Reaktionsgefäß 1 alternativ ausschließlich eine Suspension von schwerlöslichen Substanzen (z. B. $PuO_2$ in allein $H_2SO_4$ von ca. 250 °C oder zusammen mit den Abfällen als Dickstoff oder Paste) über das Zuführungsrohr 8 oder zusammen mit anderen Säuren (z. B. $HNO_3$ 65 %-ig über Leitung 13) und Gasen bzw. Luft (Leitung 14) über das Zuführungsrohr 7 zugeführt werden.

Die Zuführungszone 4 liegt, in Umwälzrichtung gesehen, vor der Heizzone 6. Die Heizzone 6 kann für den Ersatz von Wärmeverlusten im Gemisch bzw. im Ringreaktor 1 und zur Unterstützung des Umlaufs durch Blasenbildung an der Oberfläche der Quarzheizkerze 6 dienen. Sie kann entfallen, wenn durch die Zufuhr von Gasen und/oder Säuren über die Leitung 7 genügend Antriebsenergie für die Umwälzung des Gemisches aufgebracht und gleichzeitig durch Erhöhung der Temperatur der zugeführten Gase und/oder Säuren Wärmeverluste ausgeglichen werden, wobei allerdings eine äußere Heizung zusätzlich vorgesehen sein kann.

Wärmeverluste können jedoch auch durch die Abfallverbrennung der über die Leitung 8 zugeführten Paste oder Dickstoffe ausgeglichen werden. Das bei der Verbrennung der organischen Abfälle entstehende Gas trägt dann ebenfalls einen Beitrag zur notwendigen Energie für die Umwälzung des Gemisches bei. Die Zuführungsleitung 8 für die Paste oder Dickstoffe liegt jedoch, in Umwälzrichtung gesehen, hinter der Zuführung 7, da z. B. beim Wegfall von organischen Abfällen und somit dem Wegfall von Gasbildung für die Umwälzung, der Auftrieb und das Mitführen der schwerlöslichen Substanzen durch die Gase und/oder Säuren über die Zuführung 7 erfolgen muß. Die Umwälzgeschwindigkeit kann mittels der Temperatur, Dosisrate und Heizleistung der einzelnen zugeführten Substanzen, Gase oder Säuren bzw. über die Heizkerze 6 variiert werden.

Der Ringreaktor 1 besitzt zusätzlich einen Ablauf 9 am tiefsten Teil der Anlage, einen Sicherheitsüberlauf 10, einen Betriebsüberlauf 11 und eine Niveaumessung 15 mittels Einperlmethode. Die Zuführung der einzelnen Gemischanteile mittels Ventilen und Pumpen ist in üblicher Weise verifizierbar.

Beispiel 1

Eine Mischung aus den Materialien : PUC 50, Neopren Gummi 20, Polyäthylene 15 und Zellstoff 15 Gew.-%, die auf eine Teilchengröße von max. 2 mm zerkleinert war, wurde in kalter 85 Gew.-%-iger Schwefelsäure zu einer Schlämme, die 25 Gew.-% Abfall enthielt, angerührt.

Ein Reaktorgefäß 1, wie in der Figur dargestellt und an eine Abgasreinigungsanlage sowie Zuführung von Abfallschlämmen, Luft und Salpetersäure angeschlossen, wurde mit 10 l kalter Schwefelsäure (85 Gew.-%) befüllt und mittels einer Quarzstab-Heizkerze 6 (5 kW) auf 250 °C erwärmt.

In das auf diese Weise in den Betriebszustand versetzte Reaktorgefäß 1 wurden gleichzeitig mittels einer Dickstoff- bzw. einer Dosierpumpe Abfallschlämme und Salpetersäure (65 Gew.-%) eingespeist.

An der Eintrittsstelle 7, 8 von Abfall und Salpetersäure kommt es zu einer starken Blasenbildung, die die gesamte Reaktorsäure und den in ihr suspendierten Abfall bzw. Rückstand in Bewegung hält.

Nach einer Stunde Betriebszeit wurde 1 kg der oben beschriebenen Abfallmischung und 4,4 l Salpetersäure (65 Gew.-%) zugegeben und restlos oxidiert. Dabei bildete sich 120 g Rückstand (Dichte D = 2 g/cm$^3$), der während des Betriebes in der Schwebe gehalten wurde.

Beispiel 2

In eine, wie in Beispiel 1 beschriebene Abfallmischung wurde zur Simulierung des Absetzverhaltens von Plutoniumpartikeln (D = 11,4 g/l) aus der Kernbrennstoffproduktion Tantaloxid (D = 8,5 g/l) von vergleichbarer Partikelgröße (80 % des Haufwerkes hat eine Korngröße zwischen 2 und 35 μm) in einem Anteil von 20 g Tantaloxid pro 1 kg Abfall beigemischt. Der so präparierte Abfall wurde auf gleiche Weise oxidiert. Nach 4 Stunden Betrieb und Dosierung von 4 kg Abfall mit zusammen 80 g Tantaloxid sowie 18 l Salpetersäure (65 Gew.-%) war der Abfall vollständig oxidiert. Solange Abfall und Salpetersäure zugegeben wurden, hat sich kein Tantaloxid und kein Rückstand abgesetzt.

Beispiel 3

In einem betriebsbereiten Reaktionsgefäß, in dem bereits 4 kg Abfallmischung mit 80 g Tantaloxid oxidiert war, wurde neben der Einstellung der Abfallzugabe, die Menge an zugegebener Salpetersäure (65 Gew.-%) von 4,4 l/h auf 1 l/h reduziert. Nach 2 Stunden derartigen Betriebes wurde keine Absetzung von Feststoff beobachtet.

Beispiel 4

In einem, wie in Beispiel 3 beschriebenem Versuch wurde statt Salpetersäure Luft mit einer Dosierrate von 0,4 m$^3$/h zugegeben.

Nach 2 Stunden derartigen Betriebes wurde keine Absetzung von Feststoff beobachtet.

Beispiel 5

Nach Oxidation von 4 kg Abfall mit 80 g Tantaloxid, das zusammen 560 g Feststoff ergibt, wurde die Heizung 6 abgeschaltet und die Zugabe von Salpetersäure und/oder Luft und Abfall eingestellt. Nach 12 h Wartezeit hatte sich die Säure auf Raumtemperatur abgekühlt und der Feststoff abgesetzt. Nun wurde die Säure auf eine Temperatur von 60 °C erwärmt und gleichzeitig Luft mit einer Dosierrate von 0,5 m$^3$/h zugegeben.

Nach 30 Min. derartigen Betriebes hat sich der gesamte Feststoff homogen in der Säure verteilt.

**Ansprüche**

1. Anlage zum Aufschluß schwerlöslicher Substanzen und/oder zur Oxidation organischer, die schwerlöslichen Substanzen enthaltender Abfälle, bei der die Substanzen mit oder ohne die Abfälle als Paste oder Dickstoff mit heißer Säure(n) in Verbindung gebracht und Wärmeverluste ausgeglichen werden, gekennzeichnet durch

a) ein ringförmiges Reaktionsgefäß (1) mit mindestens einem horizontal und einem vertikal verlaufenden Bereich (2, 3),

b) eine Zuführungszone (4) für Paste oder Dickstoff, und Säure(n) und/oder Gase im vertikalen Bereich (3) und

c) eine Entgasungszone (5) im horizontalen Bereich (2).

2. Anlage nach Anspruch 1, dadurch gekennzeichnet, daß die Substanzen und/oder Abfälle, die Säure(n) und/oder Gase als Antrieb für einen Umlauf des im Reaktionsgefäß (1) entstehenden Gemisches verwendbar sind.

3. Anlage nach Anspruch 1 und 2, dadurch gekennzeichnet, daß zum Ausgleich der Wärmeverluste eine direkte Heizung (6) oder/und der Wärmeinhalt der zugeführten Säure(n), Gase und/oder der Abfälle dient.

4. Anlage nach Anspruch 1 oder einem der folgenden, dadurch gekennzeichnet, daß die Umlaufgeschwindigkeit des Gemisches in dem Reaktionsgefäß (1) über Temperatur, Dosierrate und Heizleistung variierbar ist.

5. Anlage nach Anspruch 1 oder einem der folgenden, dadurch gekennzeichnet, daß im vertikalen Bereich (3), in bezug auf die Umlaufrichtung des Gemisches, hinter der Zuführungszone (4) die Heizung (6) in Form einer Heizkerze im Reaktionsgefäß (1) angeordnet ist.

6. Anlage nach Anspruch 1 oder einem der folgenden, dadurch gekennzeichnet, daß die Zuführung (7) der Säure(n) und/oder Gase, in bezug auf die Umlaufrichtung, vor der Zuführung (8) der Paste oder des Dickstoffes liegt.

7. Anlage nach Anspruch 1 oder einem der folgenden, dadurch gekennzeichnet, daß am Reaktionsgefäß (1) ein Ablaß (9) und ein Sicherheits- und/oder Betriebsüberlauf (10, 11) angeordnet ist.

**Claims**

1. Apparatus for decomposing difficultly soluble substances and/or for oxidizing organic wastes containing difficultly soluble substances, in which apparatus the substances with or without the wastes in the form of a paste or viscous substance are reacted with hot acid(s) and heat losses are compensated, comprising ;

a) a ring-shaped reaction vessel (1) including at least one horizontally extending region and at least one vertically extending region (2, 3) ;

b) a feeder means (4) for paste or viscous substance and acid(s) and/or gases in the vertically extending region (3), and

c) a degasification means (5) in the horizontally extending region (2).

2. Apparatus as defined in Claim 1, wherein the materials and/or wastes, the acid(s) and/or gases can be used to promote circulation of the mixture formed in the reaction vessel (1).

3. Apparatus as defined in Claims 1 and 2, wherein a direct heating means (6) or/and the heat content of the acid(s), gases and/or the wastes supplied serve to compensate for the heat losses.

4. Apparatus as defined in Claim 1 or in one of the following claims, wherein the rate of circulation of the mixture in the reaction vessel (1) can be varied via temperature, rate of addition and heating capacity.

5. Apparatus as defined in Claim 1 or in one of the following claims, comprising the heating means (6) in the form of a heating plug body provided in the reaction vessel (1) in the vertically extending region (3) behind the feeder means (4) with respect to the direction of mixture circulation.

6. Apparatus as defined in Claim 1 or in one of the following claims, wherein the feeder means (7) of the acid(s) and/or gases precedes the feeder means (8) of the paste or the viscous substance with respect to the direction of circulation.

7. Apparatus as defined in Claim 1 or in one of the following claims, comprising a discharge means (9) and a safety and/or overflow means (10, 11) provided at the reaction vessel (1).

**Revendications**

1. Dispositif pour la désagrégation de substances difficilement solubles et/ou pour l'oxydation de déchets organiques, contenant ces substances difficilement solubles, où les substances sont amenées au contact d'acide(s) chaud(s), avec ou sans les déchets, sous forme de pâte ou de liquide épais, et où les pertes caloriques sont compensées, dispositif caractérisé par ;

a) un récipient de réaction (1) en forme de boucle, avec au moins une section horizontale et une section verticale (2, 3),

b) une zone d'alimentation (4) pour pâte ou liquide épais, et acide(s) et/ou gaz dans la section verticale (3) et,

c) une zone de dégazage (5) dans une section horizontale (2).

2. Dispositif selon la revendication 1, caractérisé en ce que les substances et/ou les déchets, le ou les acides et/ou gaz peuvent être utilisés pour assurer le mouvement de circulation du mélange formé dans le réacteur (1).

3. Dispositif selon l'une des revendications 1 et 2, caractérisé en ce que pour compenser les

pertes caloriques, on utilise un chauffage direct (6) et/ou la capacité calorique du ou des acides, gaz et/ou déchets introduits.

4. Dispositif selon l'une quelconque des revendications 1 à 3, caractérisé en ce que la vitesse de circulation du mélange dans le vase réactionnel (1) peut être ajustée en agissant sur la température, le débit de l'introduction et la capacité de chauffage.

5. Dispositif selon l'une quelconque des revendications 1 à 4, caractérisé en ce que le chauffage (6) est disposé, sous la forme d'une bougie chauffante, dans le réacteur (1), dans la section verticale (3), après la zone d'alimentation (4) par rapport au sens de la circulation du mélange.

6. Dispositif selon l'une quelconque des revendications 1 à 5, caractérisé en ce que la conduite d'amenée (7) du ou des acides et/ou du gaz se trouve avant la conduite d'amenée (8) de la pâte ou du liquide épais, par rapport au sens de la circulation.

7. Dispositif selon l'une quelconque des revendications 1 à 6, caractérisé en ce que sur le réacteur (1) sont montés une évacuation (9) et un trop-plein de sécurité (10) et/ou un trop-plein de fonctionnement (11).

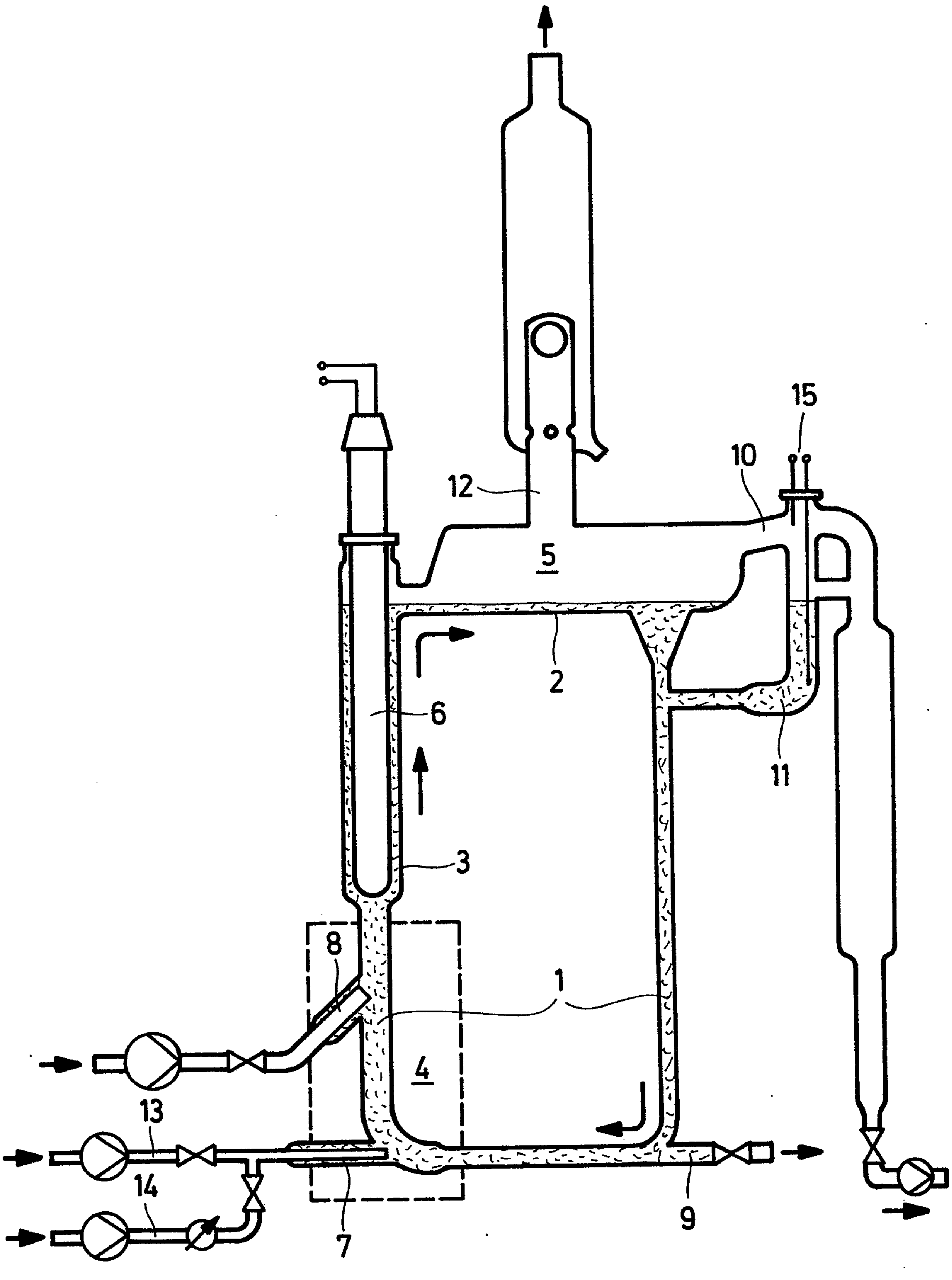
12
10
15
5
2
6
11
3
8
1
4
13
14
7
9